# EUROPÄISCHE PATENTSCHRIFT

(11) **EP 1 759 924 B1**
(45) Veröffentlichungstag und Bekanntmachung des Hinweises auf die Patenterteilung: **13.01.2010**
(21) Anmeldenummer: 06117741.6
(22) Anmeldetag: 24.07.2006
(51) Int. Cl.: B60R 1/00

(54) **Sichtgerät für ein Fahrzeug**
Viewing arrangement for vehicle
Dispositif de vision pour véhicule

(30) Priorität: 01.09.2005 DE 102005041467
(43) Veröffentlichungstag der Anmeldung: 07.03.2007
(73) Patentinhaber: ROBERT BOSCH GMBH, 70442 Stuttgart (DE)
(72) Erfinder: Schmack, Andreas, 71229, Leonberg (DE)

(56) Entgegenhaltungen:
- FR-A- 2 465 612

## Beschreibung

Die Erfindung betrifft ein Sichtgerät für ein Fahrzeug mit mindestens einer Videokamera und einem Bildschirm, wobei die mindestens eine Videokamera mit einer steuerbaren Schwenk-, Neige- und/oder Zoom-Einrichtung versehen ist.

### Stand der Technik

In zunehmenden Maße werden im Zusammenhang mit Kraftfahrzeugen Videokameras verwendet. Eine dieser Anwendungen ist die Nachtsicht, bei welcher eine nach vom gerichtete Videokamera die Sichtweite über den Ausleuchtungsbereich der Scheinwerfer hinaus ausdehnen soll. Zur Anpassung des Blickwinkels an verschiedene Geschwindigkeiten sind beispielsweise aus WO 02/36389 A1 Kameras mit Zoom-Objektiven bekannt geworden. Dabei steigt die Brennweite mit steigender Geschwindigkeit an, so dass auch weit entfernte Objekte erkennbar sind, während bei niedriger Geschwindigkeit durch eine kleine Brennweite ein großes Gesichtsfeld entsteht, um Randbereiche der Straße besser einsehen zu können, beispielsweise Einmündungen, Fuß- und Radwege. Außer der Verstellung der Brennweite sind Einrichtungen zum Schwenken und Neigen der Videokamera bekannt geworden, beispielsweise um die Blickrichtung einer Kurvenfahrt anzupassen, was beispielsweise in EP 15 04 960 A1 beschrieben ist.

Aus der gattungsbildenden FR 7917337 A1 ist eine elektronische Rückfahrkamera für ein Kraftfahrzeug bekannt.

Durch die Änderung der Blickrichtung und/oder des Gesichtsfeldes können sich jedoch Irritationen für den Fahrer des Fahrzeugs ergeben, beispielsweise den Abstand zwischen seinem Fahrzeug und den angezeigten Objekten nicht korrekt einschätzen zu können.

### Vorteile der Erfindung

Aufgabe der vorliegenden Erfindung ist es, derartige Irritationen weitgehend auszuschließen. Diese Aufgabe wird bei dem erfindungsgemäßen Sichtgerät durch Anzeigemittel für die Anzeige der Stellung der Schwenk-, Neige- und/oder Zoom-Einrichtung im Bereich des Bildschirms gelöst. Die Erfindung ist nicht nur für Nachtsichtgeräte anwendbar, sondern für jegliche Sichtgeräte, bei denen mindestens eine Videokamera mit einer Schwenk-, Neige- und/oder Zoom-Einrichtung versehen ist. Derartige Kameras können in Fahrtrichtung oder auch nach rückwärts als Rangierhilfe ausgerichtet sein. Die Schwenk-, Neige- und/oder Zoom-Einrichtung kann mechanisch und/oder elektronisch realisiert sein. Als Bildschirm ist jede passende Bildwiedergabeeinrichtung einschließlich sogenannter Head-up-Displays geeignet.

Das erfindungsgemäße Sichtgerät, gemäss Anspruch 1, kann derart ausgebildet sein, dass die Anzeigemittel eine außerhalb am Rand des Bildschirms vorgesehene Anzeigeeinrichtung aufweisen. Je nach Voraussetzungen im Einzelnen können auch zusätzlich Zeichen in das Bild eingeblendet werden.

Eine vorteilhafte Weiterbildung des Sichtgeräts besteht darin, dass die Größe und/oder Lage der Anzeige derart gesteuert wird, dass bei Verstellung der Schwenk-, Neige- und/oder Zoom-Einrichtung die Mitte der Anzeige auf eine Verlängerung der Fahrzeugachse und die Größe der Anzeige auf einen vorgegebenen Gesichtswinkel hinweist. Hierbei kann beispielsweise eine Schwenk-, Neige- und/oder Zoom-Einstellung durch einen am unteren Bildrand erscheinenden Balken dargestellt sein, dessen Länge der waagerechten Ausdehnung des Gesichtsfeldes derart entspricht, dass bei maximaler Brennweite der Balken die gesamte Breite des Bildschirms einnimmt. Wenn dann beispielsweise das Gesichtsfeld bei minimaler Brennweite dreimal größer als bei maximaler Brennweite ist, nimmt der Balken ein Drittel der Bildbreite ein. Bei in Geradeausrichtung geschwenkter Kamera ist ein solcher Balken in der Mitte der unteren Seite des Bildes; schwenkt die Kamera jedoch nach rechts, wandert der Balken entsprechend dem Schwenkwinkel nach links.

Die Anzeige als solche kann viele verschiedene Formen einnehmen. So kann beispielsweise vorgesehen sein, dass die Anzeige aus mindestens einer Skala besteht oder dass die Anzeige von mindestens einem Balken gebildet wird. Eine Skala kann dabei Striche und numerische Angaben enthalten, wie übliche Messgeräte-Skalen, oder auch aus einzelnen Graphiksymbolen in vorgegebenen Abständen bestehen.

Eine andere Weiterbildung der Erfindung besteht darin, dass an einer vertikalen Skala zur Anzeige der Neigung und/oder der Zoom-Stellung mindestens eine Entfernungsangabe vorgesehen ist. Die Entfernungsangabe kann vorzugsweise derart ausgeführt sein, dass in einer bestimmten Höhe eines oder beider Seitenränder des Bildes eine Zahlenangabe eingeblendet ist, welche den Abstand desjenigen Punktes auf der Fahrbahn zum Fahrzeug darstellt, der in gleicher Höhe wie die Markierung sichtbar ist.

Eine vorteilhafte Ausgestaltung der Erfindung besteht darin, dass eine horizontale Skala zur Anzeige der Blickrichtung und/oder der Zoom-Stellung vorgesehen ist.

Zusätzlich oder anstelle der beweglichen Markierungen und Skalen kann bei der Erfindung auch vorgesehen sein, dass die Anzeigemittel numerische Anzeigen für die Stellung der Schwenk-, Neige- und/oder Zoom-Einrichtung sind.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 ein erstes Ausführungsbeispiel,
Fig. 2 ein zweites Ausführungsbeispiel, jeweils als Blockschaltbild,
Fig. 3 bis Fig. 8 verschiedene Anordnungen der Anzeigen im Zusammenhang mit einem wiedergegebenen Bild.

### Beschreibung der Ausführungsbeispiele

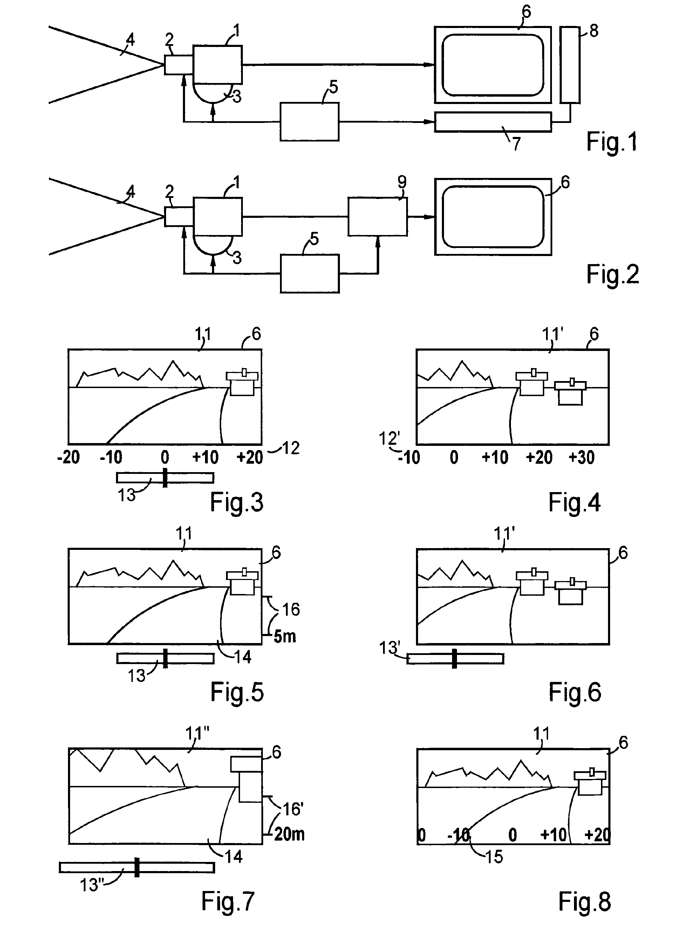

Bei den in den Figuren 1 und 2 dargestellten Ausführungsbeispielen ist jeweils eine Videokamera 1 vorgesehen mit einem Zoom-Objektiv 2 und einer Schwenk- und Neige-Einrichtung 3. Das Zoom-Objektiv 2 und die Schwenk- und Neige-Einrichtung 3 werden im Zusammenhang mit der vorliegenden Erfindung auch als Schwenk-, Neige- und/oder Zoom-Einrichtung bezeichnet. Mit dem Zoom-Objektiv kann der Gesichtswinkel 4 der Videokamera 1 verstellt werden. Die Einrichtungen 2, 3 werden mit Hilfe eines Steuergerätes 5 verstellt, das als automatische Steuerung ausgeführt sein kann, beispielsweise zur geschwindigkeitsabhängigen Einstellung des Gesichtswinkels 4. Die Ausgangssignale der Videokamera 1 werden einem Bildschirm 6 zugeführt, während das Steuergerät 5 Anzeigeeinrichtungen 7, 8 ansteuert, die an der unteren und an der rechten Seite des Bildschirmes angeordnet sind (Fig. 1) und beispielsweise von LCD-Elementen gebildet werden.

Bei dem Ausführungsbeispiel nach Fig. 2 ist zwischen der Videokamera 1 und dem Bildschirm 6 eine Mischeinrichtung 9 vorgesehen, die von dem Steuergerät 5 erzeugte Signale, welche die Anzeigen darstellen, den Videosignalen zumischt, so dass die Anzeigen als eingeblendete Zeichen auf dem Bildschirm erscheinen.

Der in Fig. 3 abgebildete Bildschirm 6 zeigt ein Bild 11, das von einer in Fahrtrichtung ausgerichteten Videokamera aufgenommen wurde, wobei das horizontale Gesichtsfeld von -20° bis +20° reicht, was durch eine unterhalb des Bildschirms gezeigte Skala dargestellt ist. Zusätzlich ist ein Balken 13 angegeben, dessen Länge einem Gesichtswinkel von 20° und dessen Lage einer Blickrichtung von 0° entspricht, was durch eine senkrechte Mittellinie verdeutlicht wird.

Bei dem in Fig. 4 dargestellten Bild 11' ist die Videokamera gegenüber der Darstellung gemäß Fig. 3 um etwa 10° nach rechts geschwenkt. Bei diesem Beispiel ist kein zusätzlicher Balken vorhanden.

In den Figuren 5 und 6 werden die Stellung des Zooms und die Schwenkung der Kamera lediglich durch einen Balken 13, 13' mit jeweils einer Mittellinie angezeigt. In Fig. 5 ist die Kamera geradeaus ausgerichtet, in Fig. 6 demgegenüber nach rechts geschwenkt.

Fig. 7 zeigt eine Zoom-Einstellung mit größerer Brennweite, so dass ein Bild 11" entsteht. An dem Balken 13" ist die Zoom-Einstellung und eine Schwenkung der Kamera nach rechts erkennbar.

Bei den Darstellungen in den Figuren 5 und 7 ist zusätzlich an der rechten Seite des Bildschirms 6 eine Skala 16, 16' angebracht, wobei an einem Teilstrich dieser Skala eine Entfernungsangabe zur Kennzeichnung der Entfernung zu denjenigen Punkten der Fahrbahn 14 angegeben ist, die auf gleicher Höhe mit dem Teilstrich liegen.

Fig. 8 zeigt ein Beispiel, bei welchem eine Skala 15 in das Bild 11 eingeblendet ist. Das gleiche kann auch mit einem in Fig. 8 nicht dargestellten Balken vorgenommen werden.

## Patentansprüche

1. Sichtgerät für ein Fahrzeug mit mindestens einer Videokamera und einem Bildschirm, wobei die mindestens eine Videokamera (1) mit einer steuerbaren Schwenk-, Neige- und/oder Zoom-Einrichtung (2, 3) versehen ist, **gekennzeichnet durch** Anzeigemittel (7, 8, 9) für die Anzeige der Stellung der Schwenk-, Neige- und/oder Zoom-Einrichtung (2, 3) im Bereich des Bildschirms (6), wobei die Anzeigemittel eine außerhalb am Rand des Bildschirms (6) vorgesehene Anzeigeeinrichtung (7, 8) aufweisen.

2. Sichtgerät nach Anspruch 1, **dadurch gekennzeichnet, dass** die Anzeigemittel zusätzlich Mittel (9) zum Einblenden von Zeichen im Randbereich des wiedergegebenen Bildes aufweisen.

3. Sichtgerät nach einem der vorhergehenden Ansprüche, **dadurch gekennzeichnet, dass** die Größe und/oder Lage der Anzeige (12, 13, 15) derart gesteuert wird, dass bei Verstellung der Schwenk-, Neige- und/oder Zoom-Einrichtung (2, 3) die Mitte der Anzeige auf eine Verlängerung der Fahrzeugachse und die Größe der Anzeige auf einen vorgegebenen Gesichtswinkel hinweist.

4. Sichtgerät nach einem der vorhergehenden Ansprüche, **dadurch gekennzeichnet, dass** die Anzeige aus mindestens einer Skala (12, 12', 15) besteht.

5. Sichtgerät nach einem der vorhergehenden Ansprüche, **dadurch gekennzeichnet, dass** die Anzeige von mindestens einem Balken (13, 13',13") gebildet wird.

6. Sichtgerät nach einem der vorhergehenden Ansprüche, **dadurch gekennzeichnet, dass** an einer vertikalen Skala (16, 16') zur Anzeige der Neigung und/oder der Zoom-Stellung mindestens eine Entfernungsangabe vorgesehen ist.

7. Sichtgerät nach einem der vorhergehenden Ansprüche, **dadurch gekennzeichnet, dass** eine horizontale Skala (12, 12', 15) zur Anzeige der Blickrichtung und/oder der Zoom-Stellung vorgesehen ist.

8. Sichtgerät nach einem der Ansprüche 1 oder 2, **dadurch gekennzeichnet, dass** die Anzeigemittel numerische Anzeigen für die Stellung der Schwenk-, Neige- und/oder Zoom-Einrichtung sind.

9. Anzeigemittel eines Sichtgerätes für ein Fahrzeug, **dadurch gekennzeichnet, dass** die Anzeigemittel die Stellung von Schwenk-, Neige- und/oder Zoom-Einrichtungen (2, 3) einer Videokamera im Bereich eines Bildschirms (6) anzeigt, wobei die Anzeigemittel eine außerhalb am Rand des Bildschirms (6) vorgesehene Anzeigeeinrichtung (7, 8) aufweisen.

## Claims

1. Visual display unit for a vehicle, having at least one video camera and a display screen, the at least one video camera (1) being provided with a controllable pivoting, tilting and/or zooming device (2, 3), **characterized by** display means (7, 8, 9) for displaying the setting of the pivoting, tilting and/or zooming device (2, 3) in the region of the display screen (6), the display means having a display device (7, 8) provided outside at the edge of the display screen (6).

2. Visual display unit according to Claim 1, **characterized in that** the display means additionally have means (9) for inserting icons in the edge region of the displayed image.

3. Visual display unit according to one of the preceding claims, **characterized in that** the size and/or position of the display (12, 13, 15) are/is controlled in such a way that upon adjustment of the pivoting, tilting and/or zooming device (2, 3) the middle of the display indicates a lengthening of the vehicle axis, and the size of the display indicates a prescribed viewing angle.

4. Visual display unit according to one of the preceding claims, **characterized in that** the display comprises at least one scale (12, 12', 15).

5. Visual display unit according to one of the preceding claims, **characterized in that** the display is formed by at least one bar (13, 13', 13'').

6. Visual display unit according to one of the preceding claims, **characterized in that** at least one indication of distance is provided on a vertical scale (16, 16') in order to display the tilt and/or the zoom setting.

7. Visual display unit according to one of the preceding claims, **characterized in that** a horizontal scale (12, 12', 15) is provided for displaying the viewing direction and/or the zoom setting.

8. Visual display unit according to either of Claims 1 and 2, **characterized in that** the display means are numerical displays for the setting of the pivoting, tilting and/or zooming device.

9. Display means of a visual display unit for a vehicle, **characterized in that** the display means displays the setting of pivoting, tilting and/or zooming devices (2, 3) of a video camera in the region of a display screen (6), the display means having a display device (7, 8) provided outside at the edge of the display screen (6).

## Revendications

1. Appareil de vision pour un véhicule, qui présente au moins une caméra vidéo et un écran, la ou les caméras vidéo (1) étant dotées d'un dispositif commandé (2, 3) de pivotement, d'inclinaison et/ou de zoom,
**caractérisé par**
des moyens d'affichage (7, 8, 9) qui affichent la position du dispositif (2, 3) de pivotement, d'inclinaison et/ou de zoom sur l'écran (6), les moyens d'affichage présentant un dispositif d'affichage (7, 8) prévu à l'extérieur du bord de l'écran (6).

2. Appareil de vision selon la revendication 1, **caractérisé en ce que** les moyens d'affichage présentent de plus des moyens (9) qui injectent des signes dans la bordure de l'image présentée.

3. Appareil de vision selon l'une des revendications précédentes, **caractérisé en ce que** la taille et/ou la position des affichages (12, 13, 15) sont commandées de telle sorte que lors d'une action de réglage du dispositif (2, 3) de pivotement, d'inclinaison et/ou de zoom, le centre de l'affichage indique le prolongement de l'axe du véhicule et la taille de l'affichage un angle d'observation prédéterminé.

4. Appareil de vision selon l'une des revendications précédentes, **caractérisé en ce que** l'affichage est constitué d'au moins une échelle (12, 12', 15).

5. Appareil de vision selon l'une des revendications précédentes, **caractérisé en ce que** l'affichage est formé d'au moins une barre (13, 13', 13'').

6. Appareil de vision selon l'une des revendications précédentes, **caractérisé en ce qu'**au moins une indication de distance est prévue sur une échelle verticale (16, 16') pour afficher l'inclinaison et/ou la position du zoom.

7. Appareil de vision selon l'une des revendications précédentes, **caractérisé en ce qu'**une échelle horizontale (12, 12', 15) est prévue pour afficher la direction d'observation et/ou la position du zoom.

8. Appareil de vision selon l'une des revendications 1 ou 2, **caractérisé en ce que** les moyens d'affichage sont des affichages numériques de la position du dispositif de pivotement, d'inclinaison et/ou de zoom.

9. Moyen d'affichage d'un appareil de vision pour un véhicule, **caractérisé en ce que** les moyens d'affichage indiquent la position de dispositifs (2, 3) de pivotement, d'inclinaison et/ou de zoom d'une caméra vidéo sur un écran (6), les moyens d'affichage présentant un dispositif d'affichage (7, 8) prévu à l'extérieur du bord de l'écran (6).
